# EUROPÄISCHE PATENTSCHRIFT

(11) **EP 2 146 189 B1**
(45) Veröffentlichungstag und Bekanntmachung des Hinweises auf die Patenterteilung: **28.10.2015**
(21) Anmeldenummer: 08104761.5
(22) Anmeldetag: 16.07.2008
(51) Int. Cl.: G01F 15/00, G01F 1/66

(54) **Ultraschallmessung von Strömungsgeschwindigkeiten**
Ultrasonic measurement of flow velocity
Mesure par ultra-sons de la vitesse d'écoulement

(43) Veröffentlichungstag der Anmeldung: 20.01.2010
(73) Patentinhaber: SICK Engineering GmbH, 01458 Ottendorf-Okrilla (DE)
(72) Erfinder: Dietz, Toralf, 01465, Dresden (DE)
(74) Vertreter: Hehl, Ulrich

(56) Entgegenhaltungen:
- EP-A- 1 227 303
- EP-A- 1 909 076
- DE-A1-102005 062 629
- DE-B1- 2 924 561
- DE-U1- 20 122 897
- US-A- 4 140 012
- US-A- 4 506 552
- US-A- 5 969 263

## Beschreibung

Die Erfindung betrifft eine Ultraschallmessvorrichtung und ein Verfahren zur Messung von Strömungsgeschwindigkeiten eines Fluids in einer Rohrleitung nach dem Oberbegriff von Anspruch 1 beziehungsweise 8.

Fluidgeschwindigkeiten in Rohrleitungen und Kanälen können mittels Ultraschallmesstechnik nach dem Differenzlaufzeitverfahren ermittelt werden. Dabei werden Ultraschallpulse von einem Paar Ultraschallwandler ausgesandt und empfangen, die einander gegenüber an einer Wandung der Rohrleitung an den Enden eines Messpfads quer zu der Strömung des Fluids angeordnet sind. Aus der Laufzeitdifferenz des Ultraschalls auf dem Messpfad mit der Strömung und in Gegenrichtung entgegen der Strömung wird die Strömungsgeschwindigkeit bestimmt. Die Ultraschallwandler arbeiten dabei wechselseitig als Sender und Empfänger. Die durch das Fluid transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet.

Mit der Querschnittsfläche ergibt sich daraus auch der Betriebsvolumenstrom, welcher bei nach Volumen abgerechnetem Fluid häufig die interessierende Messgröße ist. Ein wichtiges und anspruchsvolles Anwendungsfeld sind Gaszähler für Erdgaspipelines, wo wegen der immensen beförderten Gasmengen und des Rohstoffwerts schon geringste Abweichungen in der Messgenauigkeit deutlich merklichen Werten entsprechen.

Ultraschalldurchflussmesser werden in diesem Bereich der Großgasmengenmessung auf Grund ihrer Genauigkeit, Wartungsfreiheit und Selbstdiagnosemöglichkeiten zunehmend eingesetzt. Um mit der erreichten Genauigkeit Anforderungen an eichpflichtige Messungen zu erfüllen, ist ein hoher Aufwand erforderlich.

Da nämlich ein Ultraschallmesspfad die Strömungsgeschwindigkeit nur an definierten Positionen abtastet, wird letztlich die mittlere Strömungsgeschwindigkeit über den gesamten Strömungsquerschnitt extrapoliert. Die Strömung muss deshalb gut reproduzierbar sein beziehungsweise ein ungestörtes Strömungsprofil aufweisen. Um hohe Genauigkeiten zu erreichen, kann das Strömungsprofil gezielt in dieser Richtung beeinflusst werden, beispielsweise über Strömungsgleichrichter oder lange, gerade Einlaufstrecken. Strömungsgleichrichter sind nur begrenzt in der Lage, die Strömung zu vergleichmäßigen, und die Beschränkung der Einbaumöglichkeit auf gerade Rohrleitungsabschnitte ist unerwünscht.

Besonders beim Einsatz von Ultraschallmessgeräten im Bereich Verteilung beziehungsweise Distribution, außerhalb etablierter Einsatzfelder wie Gastransport und Gaslagerung, erfolgt die Installation typischerweise in Gasdruckregelstationen, in denen vom Mittel- oder Hochdruck der Transportleitung auf Nieder- beziehungsweise Mitteldruck des Verteilernetzes reduziert wird. Diese Reduktion erfolgt über Regelventile, und derartige Bauteile erzeugen Störschall im Ultraschallbereich, der sich den eigentlichen Messsignalen überlagert und somit die Messgenauigkeit beeinträchtigen kann.

Neben Maßnahmen, die Strömung zu vergleichmäßigen, lässt sich die Messgenauigkeit auch durch eine Vielzahl von Ultraschallwandlern auf mehreren Messpfaden verbessern. Jeder Messpfad bildet dann eine zusätzliche Stützstelle der Abtastung des Strömungsprofils. Die zusätzlichen Ultraschallwandler und die entsprechend leistungsfähigeren Auswertungsschaltungen verteuern derartige Ultraschallmessgeräte.

Insgesamt bedeutet dies für den Anwender herkömmlicher Ultraschallmessgeräte den Nachteil, dass zusätzliche Installationen vorgenommen werden müssen, welche erhöhte Kosten und Baugröße mit sich bringen. Ein weiterer Nachteil ist die Art der Montage: Das Ultraschallmessgerät wird üblicherweise anstelle eines Rohrleitungsabschnitts angeflanscht. Fällt die Messvorrichtung aus oder soll sonst eine Wartung vorgenommen werden, so muss der Rohrleitungsabschnitt aus- und nach Abschluss der Arbeiten wieder eingebaut werden. Da Gaszähler regelmäßigen Rekalibrierungszyklen unterliegen, ist eine derartige Wartung entsprechend häufig notwendig. Dabei ist die Kalibrierung in einem besonderen Hochdruckprüfstand vorzunehmen, der keineswegs in örtlicher Nähe zu dem Betriebsort liegen muss. Jedes Mal muss der komplette Zähler einschließlich des drucktragenden Gehäuses aus der Leitung ausgebaut, eingeschickt und danach wieder eingebaut werden. Ein zwischenzeitlicher Betrieb ist nur möglich, wenn ein eigens für den Einsatzort kalibriertes Ersatzteil eingebaut wird.

Neben der Ultraschallmesstechnik werden mechanische Turbinenradzähler oder Drehkolbenzähler zur Gasmessung eingesetzt. Hier gibt es auch Ausführungen, bei denen die Strömung für den Zähler umgelenkt und nach der Messung wieder in die Strömungsrichtung der Rohrleitung zurückgelenkt wird. Für mechanische Messung ist die Ausbildung der Strömung weitgehend gleichgültig, so dass die Störung der ursprünglichen Strömung und Strömungsrichtung ohne weiteres in Kauf genommen werden kann. Bei Ultraschallzählern ist man stets bestrebt, sie nur nach einer langen und vorzugsweise geraden Beruhigungsstrecke zu montieren, so dass die Strömung sich vergleichmäßigen kann, und dies durch Strömungsgleichrichter noch zu unterstützen. Weiterhin werden auch der Ultraschallzähler selbst so montiert und ausgebildet, dass das Fluid möglichst frei und ungestört strömen kann. Deshalb erscheint eine Umlenkung der Strömung für den Zähler im Bereich der Ultraschallmesstechnik aus herkömmlicher Sicht nachteilig.

Die mechanische Messweise dieser Zähler hat außerdem den Nachteil, dass bewegte und damit stör- und verschleißanfällige Teile direkt in der Strömung angeordnet sind. Weiterhin fehlen die diagnostischen Eigenschaften, welche im Ultraschallzähler durch die Beobachtung zusätzlicher Messgrößen gewonnen werden können. Der Status des Messgeräts oder des Messprozesses kann also nicht überwacht und analysiert werden, beziehungsweise hierfür ist jeweils eine sehr kosten- und zeitaufwändige Prüfung erforderlich. Aufgrund der fehlenden Diagnosemöglichkeiten und damit fehlender Kontrolle über die Messgenauigkeit ist dies angesichts der hohen Werte, welche schon geringen Genauigkeitsabweichungen entsprechen können, für den Benutzer unbefriedigend.

Andererseits sind mechanische Zähler kostengünstiger. Ein möglicher Ansatz, die Kosten eines Ultraschallzählers zu reduzieren, ist eine Verringerung der Anzahl von Messpfaden. Es ist aber bei herkömmlichen Ultraschallzählern nicht möglich, mit nur einem oder zwei Messpfaden auszukommen, weil das herkömmlich nicht hinreichend reproduzierbare Strömungsprofil damit nicht genau genug abgetastet werden kann und somit die erforderliche Messgenauigkeit nicht erreicht wird.

Aus der DE 10 2005 062 629 A1 ist ein ultraschallbasierter Wasserzähler für den Haushaltsgebrauch bekannt. Dabei wird das Wasser radial aus der Strömung umgelenkt und durch eine Messkammer über einen Austrittsbereich der Strömung wieder zugeführt. Die Messkammer bildet einen Ring, dessen Ebene parallel zu der Strömungsrichtung in der Rohrleitung liegt. Ultraschall durchstrahlt den Ring mit Hilfe von mehreren umlenkenden Reflektoren. Die Messkammer ist mit zahlreichen aufwändig geformten Vorsprüngen und Öffnungen versehen, um eine gleichmäßige Ringströmung zu erzeugen, welche nach der Lehre der DE 10 2005 062 629 A1 auch dafür sorgen soll, die Reflektoren optimal zu spülen und Luftblasen zu vermeiden, so dass die Messung nicht beeinträchtigt wird. Die Gestaltung der Messkammer und somit der Strömungs- und Schallpfade in ihrem Inneren ist somit sehr aufwändig. Zusätzlich zu den Kosten, die solche Bauteile mit sich bringen, müsste auch die Ultraschallmessung beim Einsatz des herkömmlichen Ringprinzips in Gaspipelines sehr genau auf diese komplizierten Pfade eingestellt werden, wobei nur sehr begrenzt auf die Erfahrungen herkömmlicher Ultraschallmessgeräte zurückgegriffen werden kann, welche direkt in der nicht abgelenkten Hauptströmung angeordnet sind.

Die US 4,506,552 beschreibt einen Ultraschall-Durchflussmesser für hochviskose bzw. tiefkalte Fluide. Um Blasen durch Temperaturgradienten und resultierende Turbulenzen zu vermeiden, liegt die Messtrecke innerhalb eines Doppelrohres, so dass in der Außenwand ebenfalls das Fluid strömt und somit zugleich eine Kühlung der Messstrecke bewirkt. In einer Ausführungsform wird der koaxiale Strömungsweg in einem t-förmigen Rohrstück geführt.

Die DE 29 24 561 B1 zeigt einen Brauchwasserzähler mit einer Ultraschallmesstrecke, welche in einer Ausführungsform senkrecht zur Strömungsrichtung der Wasserleitung liegt, indem ein 90°-Rohleitungsstück das Wasser der Messstrecke zuleitet und ein entsprechendes 90°-Rohrleitungsstück das Wasser wieder in die Wasserleitung zurückführt.

Die EP 1 227 303 A2 zeigt einen weiteren Ultraschalldurchflusszähler, bei dem das Fluid aus der Leitung heraus auf eine parallel zu der Leitung verlaufende Messtrecke umgelenkt wird. Die Messkapsel ist beim Einsatz als Wasserzähler auf eine übliche Armatur montierbar.

In der EP 1 909 076 A1 wird ein ähnlicher Grundaufbau für einen Durchflussmesser dargestellt, dessen Messkapsel auf eine Anschlussarmatur angebracht wird und bei dem eine Ultraschallmesstrecke in einem Rohr parallel zur eigentlichen Leitung realisiert ist.

Die US 4,140,012 offenbart einen Ultraschalldurchflussmesser, bei dem die Messtrecke senkrecht und mittig innerhalb der eigentlichen, im Bereich der Messtrecke im Durchmesser vergrößerten Leitung angeordnet ist, während eine im 45°-Winkel stehende Umlenkung das Fluid zwingt, mittels zweimaligem senkrechten Richtungswechsel die Messtrecke zu durchströmen.

Daher ist Aufgabe der Erfindung, eine genaue und einfache Ultraschallmessung von Strömungsgeschwindigkeiten zu ermöglichen.

Diese Aufgabe wird durch eine Ultraschallmessvorrichtung und ein Verfahren zur Messung von Strömungsgeschwindigkeiten eines Fluids nach Anspruch 1 beziehungsweise Anspruch 8 gelöst.

Dabei geht die erfindungsgemäße Lösung von dem Prinzip aus, die Strömung innerhalb der Rohrleitung mittels Umlenkung von den Strömungsverhältnissen in der Rohrleitung unabhängig zu machen. Dafür löst sich die Erfindung von der herkömmlichen Vorstellung, dass eine Umlenkung der Strömung die Ultraschallmessung stört. Das Fluid strömt in der Messzone, also dem Ultraschallmessbereich, auch dann reproduzierbar und vergleichmäßigt, wenn die Strömung in der Rohrleitung selbst keineswegs ein gleichmäßiges Profil aufweist und daher durch einzelne Messpfade nur ungenau abgetastet würde. Es kommt also nicht darauf an, die Strömung nicht zu beeinträchtigen, sondern vielmehr darauf, sie reproduzierbar zu beeinflussen. Indem die Messzone in einem geraden Strömungsbereich angeordnet wird, liegt trotz Irregularitäten der Strömung und gerade wegen der Umlenkung ein sehr genau durch einen oder wenige Messpfade abtastbares Strömungsprofil vor.

Unter Messstrecke wird derjenige Bereich der Strömung innerhalb der Ultraschallmesszone verstanden. Weiterhin bedeutet eine gerade Messstrecke, dass die Strömung innerhalb des Ultraschallmessbereichs nicht umgelenkt wird. Unebenheiten oder kleinere Biegungen mit sehr flachen Winkeln innerhalb der Messtrecke sind dabei aber nicht ausgeschlossen. Die Messpfade selbst sind allerdings nur bevorzugt gerade. Es ist denkbar, beide Ultraschallwandler eines Paares an derselben Seite der Messstrecke und gegenüber einen oder mehrere Reflektoren anzuordnen. Die Reflektoren können alternativ auch auf einem Element in der Strömung angeordnet sein, der möglicherweise zusätzlich Eigenschaften eines Strömungsgleichrichters hat. Es ist auch denkbar, die Messpfade parallel zur Strömung in Richtung der Messstrecke anzuordnen.

Die Erfindung hat den Vorteil, dass die Messgenauigkeit nicht oder zumindest kaum von Störungen der Strömung in der Rohrleitung abhängt. Es genügt daher bereits ein Messpfad, um aus dessen Abtastung auf die gesamte mittlere Strömungsgeschwindigkeit zu schließen, weil das Strömungsprofil gut reproduzierbar ist. Somit kommt auch eine hochgenaue und Eichanforderungen genügende Messung mit einem Ultraschallwandlerpaar aus, auch wenn in der Praxis unter anderem aufgrund der Normenlage häufig zwei Messpfade vorgesehen werden.

Die Messstelle ist reproduzierbar von dem variablen in der Rohrleitung am Eingang der Ultraschallmessvorrichtung vorliegenden Strömungsprofil entkoppelt. Gleichzeitig findet eine Entkopplung und Schalldämmung gegenüber vor- oder nachgeschalteten Störquellen statt, insbesondere Druckregelventilen oder Biegungen der Rohrleitung. Mit minimaler Einbaulänge und einer minimalen Messpfadzahl ist die Ultraschallmessvorrichtung kostengünstig herstellbar und verwirklicht Vorteile der Ultraschallmessung wie gute Diagnosemöglichkeiten und die Vermeidung mechanischer Verschleißteile gegenüber Turbinenradzählern oder Drehkolbenzählern.

Weiterhin wird der Einfluss von vor dem Ultraschallmessbereich liegender Störquellen unterdrückt. Stromauf wie stromab angeordnete Ultraschallstörquellen, etwa Druckregelventile, werden mit jedem Bogen bei der Strömungsumlenkung sehr effektiv gedämpft. Auch diese Entkopplung von Störquellen durch die Konstruktion der Strömungsführung erhöht die Messgenauigkeit, verhindert Beeinträchtigungen der Messung durch Druckregler und erleichtert damit den Einsatz in Verteilernetzen, wobei gleichzeitig das Ultraschallmessgerät insgesamt sehr kostengünstig bleibt.

Der Messpfad ist quer zu der Strömung des Fluids angeordnet. Damit lassen sich die Messpfade möglichst weit unten in dem Stutzen anordnen, also nachdem die Strömung eine möglichst große Laufstrecke durchströmt hat, um sich zu vergleichmäßigen. Die Messung wird auf diese Weise noch genauer. Mit einem Messpfad quer zur Strömungsrichtung ist selbstverständlich kein genau senkrecht zur Messstrecke orientierter Messpfad gemeint, da ohne einen Versatz des Ultraschallwanderpaares untereinander keine richtungsabhängige Laufzeitdifferenz entsteht. Sinnvolle Messwinkel sind beispielsweise 0°-75°, wobei 0° einem axialen Messpfad und damit einer anderen Ausführungsform entspricht, in welcher die Messpfade gerade nicht quer angeordnet sind, und wobei auch größere Winkel als 75° noch sinnvolle Messergebnisse liefern können und daher von der Erfindung umfasst, wenn auch weniger bevorzugt sind.

Die Ultraschallmessvorrichtung weist ein rohrförmiges Basisstück mit Anschlussflanschen für die Rohrleitung sowie einen in dem Winkel zu dem Basisstück stehenden Stutzen auf, welcher den Zuführungsbereich und den Ultraschallmessbereich enthält. Das Basisstück wird dann als Teilstück der Rohrleitung angeflanscht und bildet von außen betrachtet einen Teil davon. Der radial nach außen stehende Stutzen enthält die Strömungsumlenkung und die eigentliche Messtechnik. Das Basisstück ist in seinen Abmessungen an Normen von Rohrleitungen angepasst, um ohne Weiteres in bestehende Rohrleitungen eingesetzt werden zu können.

Der Winkel beträgt zumindest 60° und ist insbesondere ein rechter Winkel. Je steiler der Winkel ist, desto gleichmäßiger wird die Strömung deshalb im Ultraschallmessbereich. Deshalb und auch wegen der mechanischen Einfachheit der Gehäusekonstruktion ist der rechte Winkel besonders günstig. In manchen Einbausituationen kann es aber auch vorteilhaft sein, von dem rechten Winkel abzuweichen und einen flacheren Winkel vorzusehen.

Der Stutzen ist vorteilhafterweise mindestens so lang wie das Basisstück und derart ausgebildet, dass das Fluid, nachdem es den Stutzen verlassen hat, in der Haupt-Strömungsrichtung weiter durch die Rohrleitung strömt. Damit wird die Hauptströmung in der Rohrleitung durch die Ultraschallmessung im Endeffekt nicht oder kaum beeinflusst. Die gleiche Länge des Stutzens führt zu einer symmetrischen, stabilen Konstruktion, welche ohne allzu viel zusätzlichen Platzbedarf auskommt. Das Basisstück wird vorteilhafterweise kurz gewählt, um den Einbau zu erleichtern, die optische Wirkung zu verbessern und die Gesamtmasse der Vorrichtung zu begrenzen. Eine gewisse Mindestlänge des Stutzens ist aber vorteilhaft, um der Strömung vor dem Ultraschallmessbereich Gelegenheit zu geben, sich zu vergleichmäßigen. Aus diesem Grund kann, wenn die Kosten und die Einbaugröße es erlauben, der Stutzen auch länger ausgebildet werden, um eine verlängerte lineare Vorzone vor dem Ultraschallmessbereich zur Verfügung zu stellen und damit die Messgenauigkeit weiter zu verbessern. Hier ist jeweils ein vernünftiger Ausgleich zwischen Baugröße und Messgenauigkeit zu finden, wobei schon kurze Stutzen die Messgenauigkeit gegenüber herkömmlichen Ultraschallmessgeräten erheblich verbessern, weil bereits die Umlenkungen zu einem erheblichen Teil zu der Verbesserung beitragen. Als Faustregel sollte der Stutzen so kurz wie möglich und so lang wie für eine stabile und genaue Messung nötig ausgebildet sein.

Der Zuführungsbereich ist derart in sich gebogen ausgeführt, dass das Fluid zunächst in einem Anströmbereich des Stutzens von dem Basisstück zu dem gegenüberliegenden Ende des Stutzens und anschließend in einem Abströmbereich zu dem Basisstück zurückgeführt wird, wobei insbesondere der Anströmbereich im Außendurchmesser des Stutzens und der Abströmbereich im Inneren des Anströmbereichs insbesondere koaxial angeordnet ist. Diese Konstruktion nutzt den Innenbereich des Stutzens unter Erhalt einer symmetrischen Querschnittsfläche besonders gut aus, wobei diese Querschnittsfläche gewöhnlich einen Kreis bildet. Die Strömung wird besonders gut reproduzierbar und vergleichmäßigt. Der Begriff Außendurchmesser bedeutet hier, dass der Anströmbereich in Umfangsrichtung in dem Innenraum des Stutzens liegt und von dessen Außenwand begrenzt wird. Eine koaxiale Anordnung bedeutet, dass Anströmbereich und Abströmbereich konzentrisch ineinander angeordnet sind. Dabei sind aber Abweichungen nicht ausgeschlossen. Es ist beispielsweise denkbar, den Anströmbereich nicht über volle 360° auszubilden. Ebenso kann es sinnvoll sein, nichtsymmetrische Querschnitte von Anströmbereich oder Abströmbereich zu wählen oder diesen Querschnitt über deren Länge zu variieren, beispielsweise mit einem konischen, der sich zu dem Umkehrbereich hin verbreitert.

Der Ultraschallmessbereich ist bevorzugt im unteren Teil des Abströmbereichs angeordnet, insbesondere direkt an den Übergang von Abströmbereich zu Basisstück angrenzend. Damit wird die volle Länge des Stutzens ausgenutzt, in der sich die Strö-mung von der Umlenkung beruhigen und linear ausbilden kann. Die Messung ist dann besonders genau.

Der Durchmesser des Abströmbereichs entspricht bevorzugt nahezu dem Durchmesser des Stutzens, der Anströmbereich bildet also im Querschnitt einen Ring kleiner Dicke. Damit wird im Außenbereich der Strömungsquerschnitt begrenzt, die Strömung also beschleunigt. Vor und während der Messstrecke steht dagegen wieder relativ viel Raum für die Strömung zur Verfügung, damit sie sich gleichmäßiger ausbilden und genauer gemessen werden kann.

In dem Anströmbereich ist bevorzugt ein Ringspalt vorgesehen, welcher der Strömung einen gezielten Drall vermitteln oder die Strömung beschleunigen kann. Der Anströmbereich kann auch als Ganzes als Ring ausgebildet sein. Der in beiden Fällen entstehende Beschleunigungseffekt wird dann unabhängig von der aktuellen Strömungssituation, von Biegungen vor der Ultraschallmessvorrichtung, von Druckventilen oder dergleichen Störungen der Strömung aufgeprägt und ist daher reproduzierbar. Die Entkopplung von externen Störquellen wird weiter verstärkt. Zwar kann der Ringspalt der Strömung auch Irregularitäten aufprägen. Da diese aber reproduzierbar sind, sind sie weniger störend, denn es ist möglich, die Irregularitäten durch Eichung und Anordnung der Messpfade aufzufangen, und das Messergebnis wird somit nicht beeinträchtigt.

In Strömungsrichtung ist vorteilhafterweise kurz nach dem Übergang von dem Anströmbereich zu dem Abströmbereich ein Strömungsgleichrichter vorgesehen, oder in dem Übergang sind Öffnungen, insbesondere Bohrungen, Spalte oder ein schaumartiges Material vorgesehen. Jede dieser Maßnahmen kann Irregularitäten der Strömung beseitigen, welche durch die Umlenkungen aufgeprägt werden, und für ein regelmäßiges Strömungsprofil sorgen. Jeder Messpfad repräsentiert die mittlere Strömungsgeschwindigkeit dann noch besser.

In einer besonders vorteilhaften Weiterbildung der Erfindung ist der Ultraschallmessbereich in einem austauschbaren Einsatz vorgesehen, welcher außerhalb des Stutzens für die Abmessungen der Rohrleitung vorkalibriert werden kann und in den Stutzen einführbar und aus dem Stutzen entfernbar ist. Das Rekalibrieren ist herkömmlich ein aufwändiger Vorgang, weil die Messstrecke erst zugänglich ist, wenn die Flanschverbindungen mit der Rohrleitung gelöst werden. Erfindungsgemäß genügt es dagegen, den Deckel des Stutzens zu öffnen und den Einsatz auszutauschen. Damit muss nur ein wesentlich kleineres und leichteres Bauteil bewegt werden, und vor allem entsteht so gut wie kein Zeitverlust, in welcher die Rohrleitung nicht genutzt werden kann, weil der Austausch sehr schnell vorgenommen werden kann.

Die Ultraschallmessvorrichtung wird bevorzugt als Gaszähler an einer Gaspipeline verwendet. Die hohe Messgenauigkeit, gute Wartbarkeit, benutzerfreundliche und detaillierte Analyse und Diagnose der Funktion der Ultraschallwandler und die Unabhängigkeit von Strömungsverhältnissen, welche durch die Vorrichtung geschaffen werden, eignet sich besonders für die hohen Ansprüche in der verrechnungspflichtigen Gasmengenmessung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: einen Längsschnitt durch eine Ausführungsform der erfindungsgemäßen Ultraschallmessvorrichtung und
- Fig. 2: eine perspektivische Längsschnittdarstellung der Ultraschallmessvorrichtung gemäß Figur 1.

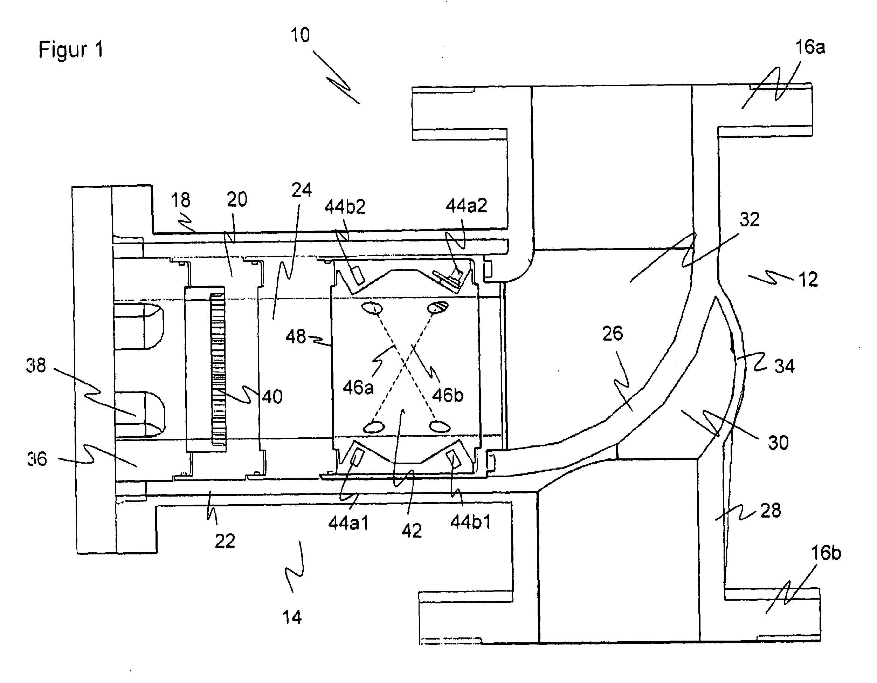

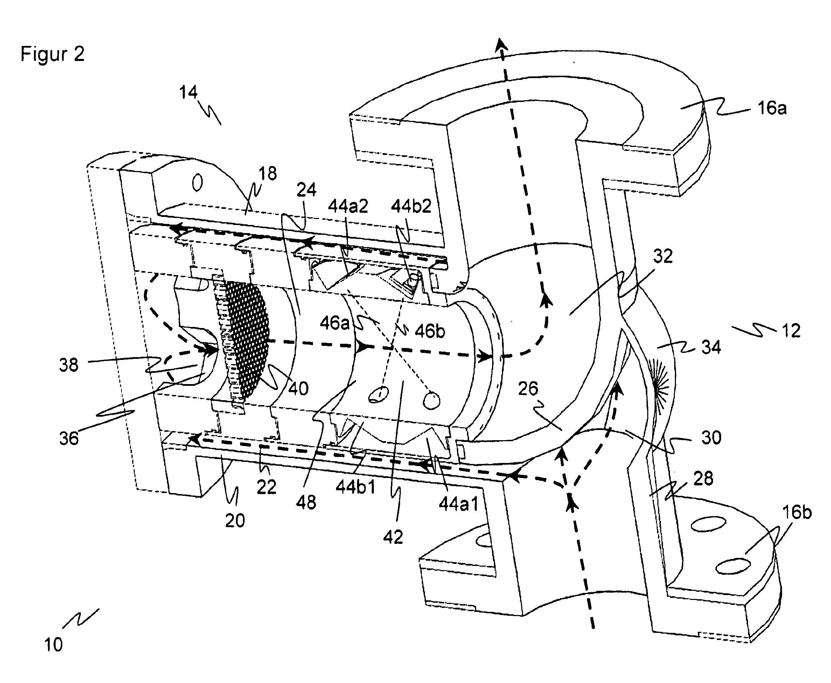

Figur 1 zeigt eine Ausführungsform einer erfindungsgemäßen Ultraschallmessvorrichtung 10 im Längsschnitt, Figur 2 zeigt die Ultraschallmessvorrichtung 10 in einer perspektivischen Längsschnittdarstellung. In beiden Figuren bezeichnen die gleichen Bezugszeichen gleiche Merkmale.

Die Ultraschallmessvorrichtung 10 weist ein Basisstück 12 und einen Stutzen 14 auf. Das Basisstück 12 ist mit Flanschen 16a, 16b versehen, mittels derer es in einer nicht dargestellten Rohrleitung montiert werden kann, welche von einem Fluid durchströmt wird. Eine spezielle Anwendung ist die Messung von Erdgas, um die geförderte oder die abgegebene Menge Erdgas für Steuerungszwecke oder zur Abrechnung zu kennen. Die Rohrleitung ist druckfest ausgelegt, es kann also auch bei hohem Druck kein Fluid nach außen entweichen. Das Basisstück 12 wird druckdicht als Abschnitt der Rohrleitung eingebaut.

Der Stutzen 14 ist im Wesentlichen ein Doppelrohr mit einer Außenwand 18 und einer Innenwand 20, welche einen äußeren, im Querschnitt ringförmigen Anströmbereich 22 von einem konzentrisch im Inneren des Anströmbereichs 22 angeordneten zylinderförmigen Abströmbereich 24 trennt. Im Übergangsbereich zwischen Basisstück 12 und Stutzen 14 geht die Innenwand 18 in eine Bogenwand 26 über, welche den Abströmbereich 24 von dem in das Basisstück 12 einströmenden Fluid trennt und sich unter Umlenkung der Strömung in Richtung des ausströmenden Fluids in das Basisstück 12 öffnet. Die Bogenwand 26 bildet also gemeinsam mit der Außenwand 28 des Basisstücks 12 einen Eingangs-Umlenkbereich 30 und einen Ausgangs-Umlenkbereich 32 in dem Basisstück 12 aus. Die Bogenwand 26 lenkt damit einströmendes Fluid in den Stutzen 14 ab und unterbricht den direkten Stromweg durch das Basisstück 12. Die Außenwand 28 bildet gegenüber der Bogenwand 26 eine Ausbuchtung 34, um dem Fluid einen glatteren ablenkenden Strömungsweg zur Verfügung zu stellen und Verwirbelungen zu reduzieren.

An dem dem Basisstück 12 gegenüberliegenden Ende des Stutzens 14 ist in einem Übergangsbereich zwischen Anströmbereich 22 und Abströmbereich 24 ein Umlenk-element 36 vorgesehen, um Fluid aus dem Ringspalt des Anströmbereichs 22 in den Abströmbereich 24 umzulenken. Das Umlenkelement 36 weist Öffnungen 38 für das Fluid auf, beispielsweise Bohrungen, Spalte, oder es ist aus einem porösen beziehungsweise schaumartigen Material hergestellt.

Im oberen Teil des Abströmbereichs 24 kann zusätzlich ein Strömungsgleichrichter 40 vorgesehen werden. In der Darstellung ist dieser beispielsweise als kreisförmige Platte mit einer Vielzahl von Löchern ausgebildet, aber es sind auch andere bekannte Ausführungen denkbar. Alternativ kann auf eine solche Strömungsbeeinflussung komplett verzichtet werden.

Im unteren Teil des Abströmbereichs 24, bevorzugt unmittelbar vor dem Beginn des Ausgangs-Umlenkbereichs 32, ist ein Ultraschallmessbereich 42 vorgesehen. Je ein Paar Ultraschallwandler 44a1, 44a2, 44b1, 44b2 ist einander gegenüberliegend an den Enden von zwei Messpfaden 46a, 46b angeordnet.

Die Ultraschallwandler 44 können alternativ Ultraschall aussenden oder empfangen. Eine nicht dargestellte Steuerung, welche Daten von allen Ultraschallwandlern 44 empfängt, wertet Unterschiede in der Laufzeit des Ultraschalls auf den Messpfaden 46 in Richtung mit der und gegen die Strömung aus, um die Strömungsgeschwindigkeit des Fluids zu bestimmen. Aus der bekannten Geometrie in der Messtrecke, also innerhalb des Ultraschallmessbereichs 42, wird der Volumenstrom und somit eine Fluid- oder Gasmenge ermittelt. Die Steuerung ist beispielsweise ein Mikroprozessor oder eine andere Logik, wie ein FPGA, ein DSP, ein ASIC und steuert auch das Aussenden von Ultraschallsignalen durch die Ultraschallwandler 44, beispielsweise als Pulsserie bei einer Ultraschallfrequenz von 80 kHz und größer.

Das Fluid durchströmt somit die Ultraschallmessvorrichtung 10, indem es zunächst in den Stutzen 14 hinein und in dessen Innerem wieder hinausgeführt wird, um anschließend in der ursprünglichen Strömungsrichtung die Ultraschallmessvorrichtung 10 wieder zu verlassen. Der Strömungsweg ist in Figur 2 durch Pfeile veranschaulicht. Die Messstrecke im Ultraschallmessbereich 42 ist damit aus der Rohrleitungsachse in eine Achse senkrecht hierzu verlagert.

Das Fluid tritt zunächst in das Basisstück 12 ein und wird in dem Eingangs-Umlenkbereich 30 um 90° in den Stutzen 14 hinein umgelenkt. In dem Ringspalt des Anströmbereichs 22 wird das Fluid beschleunigt, ehe es am Ende des Stutzens 14 von dem Umlenkelement 36 in die Gegenrichtung um 180° in den Abströmbereich 24 umgelenkt wird. Dabei werden Irregularitäten der Strömung sowohl durch die Konstruktion des Umlenkelements 36 als auch durch den optionalen Strömungsgleichrichter 40 verringert. Nachdem das Fluid bereits ein gerades Teilstück des Abströmbereichs 24 durchströmt hat, tritt es in die in gerader Verlängerung angeordnete und ebenfalls gerade Messstrecke des Ultraschallmessbereichs 42 ein. Hier wird die Strömungsgeschwindigkeit mit einer minimalen Anzahl von Messpfaden 46 gemessen, wobei ein Messpfad 46a ausreicht, zumindest ein zusätzlicher Messpfad 46b oder noch weitere Messpfade zur weiteren Erhöhung der Genauigkeit und zur Erfüllung von Normvorgaben ergänzt sein können. Unmittelbar an den Ultraschallmessbereich 42 anschließend wird das Fluid in dem Ausgangs-Umlenkbereich 32 erneut um 90° umgelenkt. Abweichend kann sich auch zunächst ein weiterer Teilbereich des Abströmbereichs 24 anschließen, wenn zum weiteren Ausgleich der Strömung noch ein linearer Bereich hinter der Messstrecke gewünscht wird. Das Fluid verlässt dann in der ursprünglichen Strömungsrichtung das Basisstück 12 und damit die Ultraschallmessvorrichtung 10.

Der Ultraschallmessbereich 42 ist in einer Ausführungsform als herausnehmbarer Messeinsatz 48 ausgebildet. Dazu weist er ein eigenes Gehäuse auf, welches in den Abströmbereich 24 eingeführt und dort mechanisch und gegenüber der Strömung stabil befestigt werden kann. Der Stutzen 14 hat zur Einführung und Entnahme des Messeinsatzes bevorzugt einen abnehmbaren druckdichten Deckel. Alternativ ist eine Druckschleuse vorgesehen, welche ermöglicht, den Einsatz auch dann auszutauschen, wenn die Rohrleitung weiterhin unter Druck steht. Der Messeinsatz 48 ist in den Figuren mehrsegmentig dargestellt. Selbstverständlich kann er alternativ auch ohne Segmentierungen oder einstückig ausgebildet sein.

Damit werden Wartungsarbeiten vereinfacht, insbesondere ein zyklisch anfallendes Rekalibrieren der Ultraschallmessvorrichtung 10. Dazu kann nämlich der Messeinsatz 48 aus dem Stutzen 14 entfernt und bei nach wie vor intakter Rohrleitung außerhalb kalibriert werden. Vor allem aber ist es möglich, einen bereits vorkalibrierten zweiten Messeinsatz zu verwenden, der vor Ort gegen den zu kalibrierenden Messeinsatz 48 ausgetauscht wird. Somit kann immer eine Reihe von vorkalibrierten Messeinsätzen 48 vorgehalten und bei Bedarf an unterschiedlichen Einsatzorten zum Austausch bei der Kalibrierung eingesetzt werden. Das Rekalibrieren wird erheblich kostengünstiger und fordert deutlich verkürzte Ausfallzeiten.

Abweichend von der Darstellung kann der Ultraschallmessbereich 42 in allen Ausführungsformen auch weiter oben in dem Stutzen 14 angeordnet sein. Zwar ist ein gerades, lineares und möglichst ausgedehntes Anströmen des Ultraschallmessbereichs 42 bevorzugt. Am wichtigsten ist aber, dass die Messstrecke selbst linear und gerade ist, und es kann möglicherweise einfacher sein, einen Einsatz 48 auszutauschen, wenn der Ultraschallmessbereich 42 weniger tief in dem Stutzen 42 liegt.

In einer weiteren Ausführungsform kann im Bereich der Zuströmung, also vor oder in dem Eingangs-Umlenkbereich 30, oder im Bereich der Richtungsumkehr in dem Stutzen 14 bei dem Umlenkelement 36 eine weitere gezielte Strömungsführung eingebaut werden, die der im Ringspalt des Anströmbereichs 22 aufsteigenden Strömung einen gezielten Drall aufprägt. Vor dem Ultraschallmessbereich 42 können zusätzlich zu dem Strömungsgleichrichter 40 weitere Strömungskonditionierer eingebaut werden, um eine noch kompaktere Bauweise zu realisieren, also den Stutzen 14 kürzer ausbilden zu können, weil die Konditionierung der Strömung die ausgleichende Wirkung eines Teils der Länge des Abströmbereichs ausgleicht. Umgekehrt kann auf den Strömungsgleichrichter 40 auch verzichtet werden.

Durch die Art der Strömungsführung in der erfindungsgemäß gestalteten Utraschallmessvorrichtung 10, insbesondere die mehrfache Umlenkung verbunden mit einer Beschleunigung im Ringspalt des Anströmbereichs 22, wird eine effektive Entkopplung der Messstrecke vom Strömungsprofil in der Rohrleitung erzielt. Innerhalb des Ultraschallmessbereichs 42 kann das Strömungsprofil zwar immer noch irregulär sein, aber auf eine reproduzierbare Weise. Dadurch ist die Messung von den Strömungsverhältnissen in der Rohrleitung weitgehend unabhängig und viel genauer. Zusätzliche Strömungskonditionierung, wie sie etwa im Zusammenhang mit dem Umlenkelement 36 oder dem Strömungsgleichrichter 40 beschrieben worden sind, können außerdem das Strömungsprofil günstig beeinflussen und die Irregularitäten reduzieren oder beseitigen.

Eine weitere Maßnahme zur Verbesserung des Strömungsprofils ist eine Verlängerung der geraden Strömungsstrecke des Abströmbereichs 24, also letztlich eine Verlängerung des Stutzens 14 auf mindestens die Länge des Basisstücks 12 bis hin zu dem Zwei-, Drei- oder Vielfachen dieser Länge. Die tatsächliche Einbaulänge in die Rohrleitung wird aber nur durch die geometrischen Abmessungen des Basisstücks 12, seiner Flansche 16a, 16b mit Verschraubung sowie der Eingangs- und Ausgangsumlenkbereiche 30, 32 bestimmt. Damit kann die Gesamtinstallation sehr kompakt gehalten werden.

Die Ultraschallmessvorrichtung 10 ist modular aufgebaut. Das Gehäuse ist durch unterschiedliche Anschlussflansche 16a, 16b beliebig in bestehende Rohrleitungen einbaubar. Strömungsführung und Ultraschallmessbereich 42 sind für jede Nennweite identisch ausgeprägt, also nicht von der konkreten Ausgestaltung der Rohrleitung abhängig, in der die Ultraschallmessvorrichtung installiert werden soll. Schließlich kann die Messsektion selbst als Einsatz 48 mit dem Ultraschallmessbereich 42 einfach nach oben durch den Stutzen 14 ausgetauscht werden, ohne dass das Gehäuse aus der Rohrleitung genommen werden muss. Die Ultraschallmessvorrichtung 10 ist mit dieser austauschbaren Messpatrone extrem gut und leicht wartbar. Trotz dieser Vorteile ist das Gerät wegen seiner einfachen Konstruktion kostengünstig herstellbar.

## Patentansprüche

1. Ultraschallmessvorrichtung (10) zum Messen der Strömungsgeschwindigkeit eines Fluids, welches in einer Rohrleitung in einer Haupt-Strömungsrichtung strömt, mit mindestens einem Paar Ultraschallwandler (44) an einem Messpfad (46) in einem Ultraschallmessbereich (42), der ausgebildet ist, von dem Fluid auf einer geraden Messtrecke in einer Mess-Strömungsrichtung durchströmt zu werden, wobei die Ultraschallmessvorrichtung (10) ein rohrförmiges Basisstück (12) mit Anschlussflanschen (16a, 16b) für die Rohrleitung sowie einen in einem Winkel zu dem Basisstück (12) stehenden Stutzen (14) aufweist, welcher einen Zuführungsbereich (30, 22, 36, 24) und den Ultraschallmessbereich (42) enthält,
wobei der Zuführungsbereich (30, 22, 36, 24) dafür ausgebildet ist, das Fluid aus der Haupt-Strömungsrichtung abzulenken und dem Ultraschallmessbereich (42) derart zuzuführen, dass die Mess-Strömungsrichtung und die Haupt-Strömungsrichtung in dem Winkel zueinander stehen und wobei der Zuführungsbereich (30, 22, 36, 24) derart in sich gebogen ausgeführt ist, dass das Fluid zunächst in einem Anströmbereich (22) des Stutzens (14) von dem Basisstück (12) zu dem gegenüberliegenden Ende des Stutzens (14) und anschließend in einem Abströmbereich (24) zu dem Basisstück (12) zurückgeführt wird,
**dadurch gekennzeichnet,**
**dass** die Ultraschallmessvorrichtung (10) als Gaszähler zur Gasmengenmessung an einer Gaspipeline ausgebildet ist, dass der Messpfad (46) quer zu der Strömung des Fluids angeordnet ist und dass der Ultraschallmessbereich (42) in dem Abströmbereich (24) angeordnet ist.

2. Ultraschallmessvorrichtung (10) nach Anspruch 1,
wobei der Winkel zumindest 60° beträgt, insbesondere ein rechter Winkel ist.

3. Ultraschallmessvorrichtung (10) nach Anspruch 1 oder 2,
wobei der Stutzen (14) mindestens so lang ist wie das Basisstück und/oder derart ausgebildet ist, dass das Fluid, nachdem es den Stutzen (14) verlassen hat, in der Haupt-Strömungsrichtung weiter durch die Rohrleitung strömt.

4. Ultraschallmessvorrichtung (10) nach einem der vorhergehenden Ansprüche, wobei der Anströmbereich (22) im Außendurchmesser des Stutzens (14) und der Abströmbereich (24) im Inneren des Anströmbereichs (22) insbesondere koaxial angeordnet ist.

5. Ultraschallmessvorrichtung (10) nach einem der vorhergehenden Ansprüche, wobei der Ultraschallmessbereich (42) im unteren Teil des Abströmbereichs (24) angeordnet ist, insbesondere direkt an den Übergang (32) von Abströmbereich (24) zu Basisstück (12) angrenzend und/oder wobei der Durchmesser des Abströmbereichs (24) nahezu dem Durchmesser des Stutzens (14) entspricht, der Anströmbereich (22) also im Querschnitt einen Ring kleiner Dicke bildet.

6. Ultraschallmessvorrichtung (10) nach einem der vorhergehenden Ansprüche, wobei in dem Anströmbereich (22) ein Ringspalt vorgesehen ist, welcher der Strömung einen gezielten Drall vermitteln oder die Strömung beschleunigen kann und/oder wobei in Strömungsrichtung kurz nach dem Übergang (36) von dem Anströmbereich (22) zu dem Abströmbereich (24) ein Strömungsgleichrichter (40) vorgesehen ist und/oder in dem Übergang Öffnungen (38), insbesondere Bohrungen, Spalte oder ein schaumartiges Material vorgesehen sind.

7. Ultraschallmessvorrichtung (10) nach einem der vorhergehenden Ansprüche, wobei der Ultraschallmessbereich (42) in einem austauschbaren Einsatz (48) vorgesehen ist, welcher außerhalb des Stutzens (14) für die Abmessungen der Rohrleitung vorkalibriert werden kann und in den Stutzen (14) einführbar und aus dem Stutzen (14) entfernbar ist.

8. Verfahren zur Messung von Strömungsgeschwindigkeiten eines Fluids, welches in einer Rohrleitung in einer Haupt-Strömungsrichtung strömt, anhand von Laufzeitunterschieden von ausgesandtem und empfangenem Ultraschall auf mindestens einem Messpfad (46), der in einem Ultraschallmessbereich (42) angeordnet ist, welcher von dem Fluid auf einer geraden Messtrecke in einer Mess-Strömungsrichtung durchströmt wird,
wobei das Fluid aus der Haupt-Strömungsrichtung in einem rohrförmigen Basisstück (12) mit Anschlussflanschen (16a, 16b) für die Rohrleitung in einem Zuführungsbereich (30, 22 36, 24) in einem Stutzen (14), der in einem Winkel zu dem Basisstück (12) steht, in die Mess-Strömungsrichtung abgelenkt wird, wobei Mess-Strömungsrichtung und Haupt-Strömungsrichtung in dem Winkel zueinander stehen und wobei der Zuführungsbereich (30, 22, 36, 24) derart in sich gebogen ausgeführt ist, dass das Fluid in einem Anströmbereich (22) eines Stutzens (14) von dem Basisstück (12) zu dem gegenüberliegenden Ende des Stutzens (14) und anschließend in einem Abströmbereich (24) zu dem Basisstück (12) zurückgeführt wird,
**dadurch gekennzeichnet,**
**dass** die Strömungsgeschwindigkeit eines Gases in einer Gaspipeline gemessen wird, dass der Messpfad (46) quer zu der Strömung des Fluids angeordnet ist und dass der Ultraschallmessbereich (42) in dem Abströmbereich (24) angeordnet ist.

9. Verfahren nach Anspruch 8,
wobei das Fluid aus der Haupt-Strömungsrichtung in den seitlichen Stutzen (14) um den Winkel von insbesondere mehr als 60° oder im rechten Winkel abgelenkt wird, in einem Außenbereich (22) des Stutzens (14) an das Ende des Stutzens (14) strömt, dort unter Richtungsumkehr in einem Innenbereich (24) des Stutzens (14) zurückströmt und schließlich in der Haupt-Strömungsrichtung weiterströmt.

10. Verfahren nach Anspruch 8 oder 9,
wobei die Strömungsgeschwindigkeit gemessen wird, kurz bevor das Fluid wieder in die Haupt-Strömungsrichtung umgelenkt wird, so dass sich vor dem Ultraschallmessbereich (42) eine gerade Strömung in der Mess-Strömungsrichtung unter Ausnutzung nahezu der vollen Länge des Stutzens (14) ausbildet.

11. Verfahren nach einem der Ansprüche 8 bis 10,
wobei das Fluid bis zu der oder im Bereich der Richtungsumkehr einen Ringspalt (22) durchströmt und dort mit einem gezielten Drall oder einer Beschleunigung beaufschlagt wird und/oder wobei das Fluid im Bereich nach der Richtungsumkehr strömungsgleichgerichtet (40) wird.

12. Verfahren nach einem der Ansprüche 8 bis 11,
wobei zum Kalibrieren ein Ultraschallmesseinsatz (48) mit Ultraschallwandlern außerhalb der Rohrleitung unter Berücksichtigung von deren Dimensionen vorkalibriert wird und der so kalibrierte Ultraschallmesseinsatz (48) anschließend in den Stutzen (14) eingesetzt wird.

## Claims

1. An ultrasonic measurement apparatus (10) for measuring the flow velocity of a fluid which flows in a pipeline in a main flow direction, having at least one pair of ultrasonic transducers (44) at a measurement path (46) in an ultrasonic measurement region (42) which is configured for a fluid to flow on a straight measurement line in a measurement flow direction, wherein the ultrasonic measurement apparatus (10) comprises a pipe shaped base piece (12) with connection flanges (16a, 16b) for the pipeline as well as a socket pipe (14) having a supply region (30, 22, 36, 24) and the ultrasonic measurement region (42) and being arranged at an angle with respect to the base piece (12), wherein the supply region (30, 22, 36, 24) is configured to deflect the fluid from the main flow direction and to guide the fluid to the ultrasonic measurement region (42) so that the measurement flow direction and the main flow direction are arranged at the angle to one another and wherein the supply region (30, 22, 36, 24) is designed bent in itself so that the fluid is guided at first in an inflow region (22) of the socket pipe (14) from the base piece (12) to the opposite end of the socket pipe (14) and afterwards guided back in an outflow region (24) to the base piece (12),
**characterized in that**
the ultrasonic measurement apparatus (10) is configured as a gas meter for gas flowmetering in a gas pipeline, **in that** the measurement path (46) is arranged transverse to the flow of the fluid, and **in that** the ultrasonic measurement region (42) is arranged in the outflow region (24).

2. The ultrasonic measurement apparatus (10) according to claim 1,
wherein the angle is at least 60°, in particular a right angle.

3. The ultrasonic measurement apparatus (10) according to claim 1 or 2,
wherein the socket pipe (14) is at least as long as the base piece (12) and/or is configured so that the fluid, after having left the socket pipe (14), continues to flow through the pipeline in the main flow direction.

4. The ultrasonic measurement apparatus (10) according to any of the preceding claims,
wherein the inflow region (22) is arranged in an outer diameter of the socket pipe (14) and the outflow region (24) is arranged inside the inflow region (22), in particular in a coaxial arrangement.

5. The ultrasonic measurement apparatus (10) according to any of the preceding claims,
wherein the ultrasonic measurement region (42) is arranged in a lower part of the outflow region (24), in particular directly adjacent the transition (32) of outflow region (24) to base piece (12), and/or wherein the diameter of the outflow region (24) nearly corresponds to the diameter of the socket pipe (14), i.e. the inflow region (22) forms a ring of little thickness in a cross section.

6. The ultrasonic measurement apparatus (10) according to any of the preceding claims,
wherein an annular gap is provided in the inflow region (22) for twisting or accelerating the flow in a desired way and/or wherein a flow rectifier (40) is arranged in flow direction shortly after the transition (36) of the inflow region (22) to the outflow region (24) and/or wherein openings (38) are provided in the transition, in particular bores, gaps or a foam-like material.

7. The ultrasonic measurement apparatus (10) according to any of the preceding claims,
wherein the ultrasonic measurement region (42) is provided in an exchangeable insert (48) which can be pre-calibrated outside the socket pipe (14) for the dimensions of the pipeline and can be inserted into the socket pipe (14) and removed from the socket pipe (14).

8. A method for measuring flow velocities of a fluid flowing in a pipeline in a main flow direction, the method being based on propagation time differences of transmitted and received ultrasound on at least one measurement path (46) arranged in an ultrasonic measurement region (42) wherein the fluid flows on a straight measurement line in a measurement flow direction, wherein the fluid is deflected from the main flow direction into the measurement flow direction in a pipe shaped base piece (12) with connection flanges (16a, 16b) for the pipeline in a supply region (30, 22, 36, 24) in a socket pipe (14) which is arranged at an angle to the base piece (12), wherein the measurement flow direction and the main flow direction are arranged at the angle with respect to one another and wherein the supply region (30, 22, 36, 24) is designed bent in itself so that the fluid is guided in an inflow region (22) of the socket pipe (14) from the base piece (12) to the opposite end of the socket pipe (14) and afterwards guided back in an outflow region (24) to the base piece (12),
**characterized in that** the flow velocity of a gas in a gas pipeline is measured, **in that** the measurement path (46) is arranged transverse to the flow of the fluid and **in that** the ultrasonic measurement region (42) is arranged in the outflow region (24).

9. The method according to claim 8,
wherein the fluid is deflected from the main flow direction by an angle of more than 60° or in a right angle in the socket pipe (14), flows in an outer region (22) of the socket pipe (14) to an end of the socket pipe (14), flows back from there in an inverse direction in an inner region (24) of the socket pipe (14) and finally continues to flow in the main flow direction.

10. The method according to claim 8 or 9,
wherein the flow velocity is measured shortly before the fluid is again deflected into the main flow direction so that there is a straight flow in the measurement flow direction upstream the ultrasonic measurement region (42) using almost the full length of the socket pipe (14).

11. The method according to any of claims 8 to 10,
wherein the fluid flows through an annular gap (22) up to the or in the region of the inversion of the direction and there is influenced by a twist or an acceleration in a desired way and/or wherein the fluid is flow rectified (40) in a region after the inversion of the direction.

12. The method according to any of claims 8 to 11,
wherein for a calibration an ultrasonic measurement insert (48) with ultrasonic transducers is pre-calibrated outside the pipeline in consideration of the pipeline's dimensions, and the calibrated ultrasonic measurement insert (48) afterwards is inserted into the socket pipe (14).

## Revendications

1. Dispositif de mesure par ultrasons (10) pour la mesure de la vitesse d'écoulement d'un fluide qui s'écoule dans une conduite tubulaire dans une direction d'écoulement principale, comprenant au moins une paire de transducteurs à ultrasons (44) sur un trajet de mesure (46) dans une zone de mesure aux ultrasons (42), laquelle est réalisée pour être traversée par le fluide en écoulement sur un parcours de mesure rectiligne dans une direction d'écoulement de mesure, dans lequel le dispositif de mesure par ultrasons (10) comprend une pièce de base de forme tubulaire (12) avec des brides de raccordement (16a, 16b) pour la conduite tubulaire, ainsi qu'une pipe (14) dressée sous un angle par rapport à la pièce de base (12) et contenant une zone d'admission (30, 22, 36, 24) et la zone de mesures aux ultrasons (42) ;
dans lequel la zone d'admission (30, 22, 36, 24) est réalisée pour dévier le fluide hors de la direction d'écoulement principale et pour l'amener à la zone de mesure aux ultrasons (46) de telle façon que la direction d'écoulement de mesure et la direction d'écoulement principale sont disposées l'une par rapport à l'autre sous l'angle précité, et dans lequel la zone d'admission (30, 22, 36, 24) est réalisée cintrée sur elle-même de telle façon que le fluide s'écoule tout d'abord dans une zone d'entrée (22) de la pipe (14) depuis la pièce de base (12) vers l'extrémité opposée de la pipe (14), et est ramené ensuite dans une zone de sortie (24) vers la pièce de base (12),
**caractérisé en ce que**
le dispositif de mesure par ultrasons (10) est réalisé sous forme de compteur à gaz pour la mesure quantitative de gaz sur un pipeline de gaz, **en ce que** le trajet de mesure (46) est agencé perpendiculairement à l'écoulement du fluide, et **en ce que** la zone de mesure aux ultrasons (42) est agencée dans la zone de sortie (24).

2. Dispositif de mesure par ultrasons (10) selon la revendication 1, dans lequel l'angle s'élève à au moins 60°, et est en particulier un angle droit.

3. Dispositif de mesure par ultrasons (10) selon la revendication 1 ou 2, dans lequel la pipe (14) est au moins aussi longue que la pièce de base et/ou est réalisée de telle façon que le fluide, après avoir quitté la pipe (14), continue à s'écouler dans la direction d'écoulement principale à travers la conduite tubulaire.

4. Dispositif de mesure par ultrasons (10) selon l'une des revendications précédentes, dans lequel la zone d'entrée (22) est agencée dans le diamètre extérieur de la pipe (14), et la zone de sortie (24) est agencée à l'intérieur de la zone d'entrée (22), en particulier coaxialement.

5. Dispositif de mesure par ultrasons (10) selon l'une des revendications précédentes, dans lequel la zone de mesure aux ultrasons (42) est agencée dans la partie inférieure de la zone de sortie (24), en particulier directement adjacente à la transition (32) depuis la zone de sortie (24) vers la pièce de base (12), et/ou dans lequel le diamètre de la zone de sortie (24) correspond pratiquement au diamètre de la pipe (14), et donc que la zone d'entrée (22) forme en section transversale une bague de faible épaisseur.

6. Dispositif de mesure par ultrasons (10) selon l'une des revendications précédentes, dans lequel, dans la zone d'entrée (22) il est prévu une fente annulaire qui est capable d'appliquer à l'écoulement un tourbillonnement ciblé ou capable d'accélérer l'écoulement et/ou dans lequel, brièvement après la transition (36) de la zone d'entrée (22) vers la zone de sortie (24) en direction d'écoulement il est prévu un égalisateur d'écoulement (40) et/ou en ce que dans la transition il est prévu des ouvertures (38), en particulier des perçages, une fente ou encore un matériau analogue à une mousse.

7. Dispositif de mesure par ultrasons (10) selon l'une des revendications précédentes, dans lequel la zone de mesure aux ultrasons (42) est prévu dans un insert (48) interchangeable, qui peut être préalablement calibré à l'extérieur de la pipe (14) pour les dimensions de la conduite tubulaire, et qui est susceptible d'être introduit dans la pipe (14) ou enlevé hors de la pipe (14).

8. Procédé pour la mesure de vitesse d'écoulement d'un fluide qui s'écoule dans une conduite tubulaire dans une direction d'écoulement principale, au moyen de différences de temps de parcours d'ultrasons émis et reçus sur au moins un trajet de mesure (46) qui est agencé dans une zone de mesure aux ultrasons (42), laquelle est traversée par l'écoulement du fluide sur un parcours de mesure dans une direction d'écoulement de mesure,
dans lequel le fluide est dévié hors de la direction d'écoulement principale dans une pièce de base (12) de forme tubulaire avec des brides de raccordement (16a, 16b) pour la conduite tubulaire dans une zone d'introduction (30, 22, 36, 24) dans une pipe (14) qui forme un angle avec la pièce de base (12), vers la direction d'écoulement de mesure, dans lequel la direction d'écoulement de mesure et la direction d'écoulement principal forment l'une avec l'autre l'angle précité, et dans lequel la zone d'introduction (30, 22, 36, 24) est réalisée cintrée sur elle-même de telle façon que le fluide s'écoule dans une zone d'entrée (22) d'une pipe (14) depuis la pièce de base (12) vers l'extrémité opposée de la pipe (14) et retourne ensuite dans une zone de sortie (24) vers la pièce de base (12),
**caractérisé en ce que** l'on mesure la vitesse d'écoulement d'un gaz dans un pipeline à gaz, **en ce que** le trajet de mesure (46) est agencé perpendiculairement à l'écoulement du fluide, et **en ce que** la zone de mesure aux ultrasons (42) est agencée dans la zone de sortie (24).

9. Procédé selon la revendication 8,
dans lequel le fluide est dévié hors de la direction d'écoulement principal vers la pipe latérale (14) sur l'angle précité, en particulier plus grand que 60°, ou encore à angle droit, s'écoule dans une région extérieure (22) de la pipe (14) à l'extrémité de la pipe (14), s'écoule à cet endroit en retour après inversion de direction dans une région intérieure (24) de la pipe (14), et poursuit enfin son écoulement dans la direction d'écoulement principale.

10. Procédé selon la revendication 8 ou 9,
dans lequel on mesure la vitesse d'écoulement brièvement avant que le fluide soit à nouveau dévié vers la direction d'écoulement principale, de sorte qu'il se forme devant la zone de mesures aux ultrasons (42) un écoulement rectiligne dans la direction d'écoulement de mesure en exploitant pratiquement la totalité de la longueur de la pipe (14).

11. Procédé selon l'une des revendications 8 à 10,
dans lequel, jusqu'à l'inversion de direction ou dans la zone de l'inversion de direction, le fluide s'écoule en traversant une fente annulaire (22) et y est soumis à un tourbillonnement ciblé ou à une accélération et/ou dans lequel l'écoulement du fluide est régularisé (40) après l'inversion de direction.

12. Procédé selon l'une des revendications 8 à 11,
dans lequel, pour le calibrage, on calibre préalablement un insert de mesure par ultrasons (48) avec des transducteurs à ultrasons à l'extérieur de la conduite tubulaire en tenant compte de ses dimensions, et l'insert de mesure par ultrasons ainsi calibré (48) est ensuite mis en place dans la pipe (14).
